(19) Europäisches Patentamt / European Patent Office / Office européen des brevets

(11) **EP 4 050 835 B1**

(12) **EUROPEAN PATENT SPECIFICATION**

(45) Date of publication and mention
of the grant of the patent:
**17.07.2024 Bulletin 2024/29**

(21) Application number: **19953716.8**

(22) Date of filing: **29.11.2019**

(51) International Patent Classification (IPC):
*H04L 7/00* (2006.01)    *H04W 56/00* (2009.01)
*H04J 3/06* (2006.01)

(52) Cooperative Patent Classification (CPC):
**H04W 56/0015; H04J 3/0667**

(86) International application number:
**PCT/JP2019/046834**

(87) International publication number:
**WO 2021/106206 (03.06.2021 Gazette 2021/22)**

(54) **NODE DEVICE, COMMUNICATION SYSTEM, CONTROL CIRCUIT, STORAGE MEDIUM, AND SYNCHRONIZATION METHOD**

KNOTENVORRICHTUNG, KOMMUNIKATIONSSYSTEM, STEUERSCHALTUNG, SPEICHERMEDIUM UND SYNCHRONISATIONSVERFAHREN

DISPOSITIF DE NOEUD, SYSTÈME DE COMMUNICATION, CIRCUIT DE COMMANDE, SUPPORT DE STOCKAGE ET PROCÉDÉ DE SYNCHRONISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.08.2022 Bulletin 2022/35**

(73) Proprietor: **MITSUBISHI ELECTRIC CORPORATION**
**Chiyoda-ku**
**Tokyo 100-8310 (JP)**

(72) Inventor: **ISHIOKA, Kazuaki**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**WO-A1-2008/107995    JP-A- 2006 310 986**
**JP-A- H10 190 562    US-A1- 2006 274 777**
**US-A1- 2010 085 989    US-A1- 2013 343 240**

• **AMULYA RATNA SWAIN ET AL: "A Weighted Average Based External Clock Synchronization Protocol for Wireless Sensor Networks", DISTRIBUTED COMPUTING SYSTEMS WORKSHOPS (ICDCSW), 2011 31ST INTERNATIONAL CONFERENCE ON, IEEE, 20 June 2011 (2011-06-20), pages 218 - 229, XP031903967, ISBN: 978-1-4577-0384-3, DOI: 10.1109/ICDCSW.2011.30**

## Description

Field

The present invention relates to a node device having a function of synchronizing with a node device that is a communication counterpart, a communication system, a control circuit, a storage medium, and a synchronization method.

Background

Generally, in a communication system, signal interference between node devices is prevented by synchronizing communication timings. For example, Patent Literature 1 discloses a method of synchronizing between two node devices. In this method, one node device detects a difference in transmission timing between itself and a node device that is a communication counterpart, and notifies the node device that is a communication counterpart of the detected difference. Each node device adjusts the transmission timing so that the detected difference is reduced.

US 2006/273777 A1 discloses a direct-current stabilized power supply device that outputs a stabilized voltage.
US 2010/085989 A1 discloses systems and methods for packet based timing offset determination or for facilitating packet based timing offset determination.
US 2013/343240 A1 discloses a wireless communication apparatus, a mobile wireless data processing apparatus, and a wireless station that control transmission/reception periods of wireless communications between plural wireless stations.

Document XP031903967 relates to a weighted average based external clock synchronization protocol for wireless sensor networks.

Citation List

Patent Literature

Patent Literature 1: Japanese Patent Application Laid-open No. 2007-288508

Summary

Technical Problem

However, according to the above-described conventional technique, in a case where there are a plurality of node devices that are communication counterparts, it is necessary to repeatedly adjust the transmission timing as many times as the number of node devices that is the communication counterparts. Therefore, as the number of node devices to be synchronized increases, it takes longer time until the differences in transmission timing converge among all the node devices to achieve synchronization, which is a problem.

The present invention has been made in view of the above, and an object thereof is to obtain a node device capable of shortening a time required for synchronizing between a plurality of node devices.

Solution to Problem

The above problem is solved by the independent claims of the present invention.

Advantageous Effects of Invention

The node device according to the present invention achieves an effect that a time required for synchronizing between a plurality of node devices can be shortened.

Brief Description of Drawings

FIG. 1 is a diagram illustrating a configuration of a communication system according to a first embodiment of the present invention.
FIG. 2 is a diagram illustrating a functional configuration of a base station illustrated in FIG. 1.
FIG. 3 is a flowchart for explaining a timing correction operation of the base station illustrated in FIG. 2.

FIG. 4 is a flowchart for explaining an operation when weight information of the base station illustrated in FIG. 2 is updated.

FIG. 5 is a flowchart for explaining an operation in which the base station illustrated in FIG. 2 updates weight information of a communication counterpart.

FIG. 6 is a diagram illustrating a configuration of a communication system according to a second embodiment of the present invention.

FIG. 7 is a diagram illustrating a configuration of a communication system according to a third embodiment of the present invention.

FIG. 8 is a diagram illustrating dedicated hardware for realizing functions of base stations according to the first to third embodiments of the present invention.

FIG. 9 is a diagram illustrating a configuration of a control circuit for realizing the functions of the base stations according to the first to third embodiments of the present invention.

Description of Embodiments

Hereinafter, a node device, a communication system, a control circuit, a storage medium, and a synchronization method according to each embodiment of the present invention will be described in detail with reference to the drawings. The present invention is not limited to the embodiments.

First Embodiment.

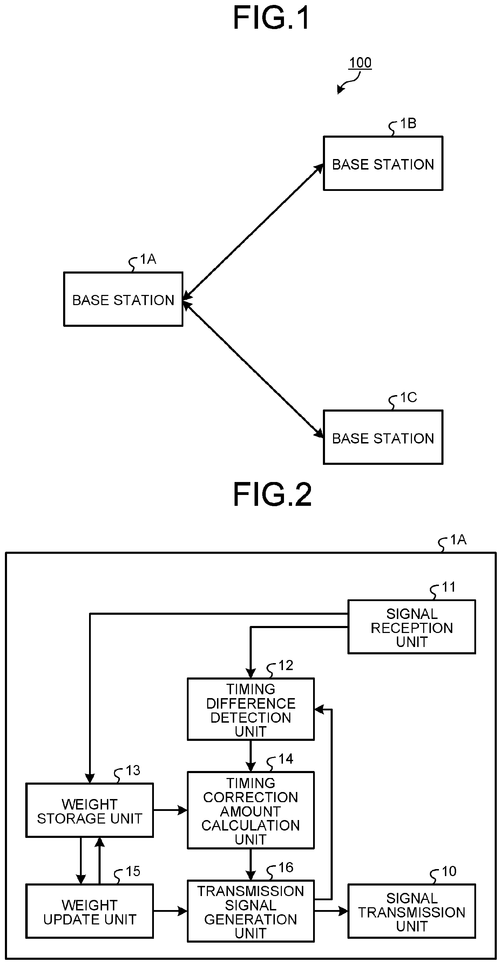

FIG. 1 is a diagram illustrating a configuration of a communication system 100 according to a first embodiment of the present invention. The communication system 100 includes a base station 1A, a base station 1B, and a base station 1C. The base station 1A and the base station 1B can communicate with each other, and the base station 1A and the base station 1C can communicate with each other. In other words, communication counterparts of the base station 1A are the base station 1B and the base station 1C, a communication counterpart of the base station 1B is the base station 1A, and a communication counterpart of the base station 1C is the base station 1A.

In the following description, each of the base stations 1A, 1B, and 1C may be referred to as a base station 1. Each of the base stations 1A, 1B, and 1C is an example of a node device having a function of autonomously synchronizing with a node device that is a communication counterpart. Here, the node device is the base station 1, and each base station 1 has a function of synchronizing between a plurality of base stations 1, but the present invention is not limited to such an example. The node device may be a communication device such as a mobile station or a base station controller. A technique described below can be applied not only to synchronization between node devices of the same type but also to synchronization between node devices of different types.

In a wireless cellular system, it is desirable to synchronize frame timing not only between a terminal and a base station but also between a plurality of base stations. This is because interference may occur between terminals each connected to corresponding one of the plurality of base stations. For example, in a time division duplex (TDD) cellular system that includes shared use by uplink and downlink in a time division manner, in a case where a plurality of terminals each connected to one of base stations of different cells are located nearby, for example, at a boundary of a plurality of cells, when one terminal transmits while another terminal is receiving, interference may occur between the terminals.

FIG. 2 is a diagram illustrating a functional configuration of the base station 1A illustrated in FIG. 1. The base stations 1B and 1C each have a functional configuration similar to the base station 1A. A base station and a node device that is a communication counterpart, are different for each device. Therefore, in the following explanation, regarding the base station 1B, the base station 1A is replaced with the base station 1B, and the base stations 1B and 1C which are node devices that are the communication counterparts are replaced with the base station 1A, and thus a detailed description of the function will be omitted. Similarly, regarding the base station 1C, the base station 1A is replaced with the base station 1C, and the base stations 1B and 1C which are node devices that are the communication counterparts are replaced with the base station 1A, and thus a detailed description of the function will be omitted.

A signal transmission unit 10 transmits a signal to the base stations 1B and 1C which are the node devices as communication counterparts. The signal transmission unit 10 can transmit a transmission signal output by a transmission signal generation unit 16. In a case where weight information described later of the base station 1A which is a base station including the signal transmission unit 10 is updated, the signal transmission unit 10 can notify the base stations 1B and 1C which are the node devices as communication counterparts of the updated weight information. A signal reception unit 11 receives a signal from each of the node devices that are the communication counterparts. The signal reception unit 11 can output the received signal to a timing difference detection unit 12. Furthermore, in a case where the received signal includes weight information, the signal reception unit 11 can update weight information stored in a weight storage unit 13 on the basis of the weight information included in the received signal. For example, in a case where the signal received from the base station 1B includes weight information Wb of the base station 1B, the signal reception unit 11 updates the weight information Wb of the base station 1B stored in the weight storage unit 13.

The timing difference detection unit 12 detect a timing difference between the base station 1A and each of the node devices that are the communication counterparts using a transmission timing at which the signal transmission unit 10 transmits a signal and a reception timing at which the signal reception unit 11 receives a signal from each of the node devices that are the communication counterparts. The timing difference detection unit 12 receives the transmission timing output by the transmission signal generation unit 16, and sets the timing at which the signal reception unit 11 receives each signal as the reception timing. The timing difference detection unit 12 can detect the timing difference by calculating a difference between the transmission timing and each of the plurality of reception timings. Specifically, the timing difference detection unit 12 calculates a difference between the transmission timing of the base station 1A and each of the reception timings of the base stations 1B and 1C, and detects a timing difference Tab between the base station 1A and the base station 1B and a timing difference Tac between the base station 1A and the base station 1C. The timing difference detection unit 12 outputs the detected timing differences Tab and Tac to a timing correction amount calculation unit 14.

The weight storage unit 13 stores the weight information of each of a plurality of node devices, specifically, weight information Wa of the base station 1A and the weight information Wb and weight information Wc of the respective base stations 1B and 1C which are the node devices as communication counterparts. The pieces of weight information Wa, Wb, and Wc are parameters used when calculating a timing correction amount which is a correction amount of a transmission timing for synchronizing between the base stations 1A, 1B, and 1C, and indicate the magnitude of an influence of a timing difference between the base stations 1 on the timing correction amount. For example, a value of the weight information Wb of the base station 1B indicates the magnitude of an influence of a timing difference between the base station 1A and the base station 1B on the timing correction amount.

The timing correction amount calculation unit 14 calculates a timing correction amount which is a correction amount of the transmission timing of the signal transmission unit 10 on the basis of the timing difference output by the timing difference detection unit 12 and the weight information stored in the weight storage unit 13. Specifically, with the use of the timing differences Tab and Tac and the weight information Wb and Wc, the timing correction amount calculation unit 14 calculates a timing correction amount Ta obtained by performing weighted averaging of the timing differences Tab and Tac. The timing correction amount Ta can be calculated using, for example, the following formula (1).

$$Ta=(Wb{\times}Tab+Wc{\times}Tac)/(Wb+Wc) \quad \cdots \quad (1)$$

It is desirable that the weight information Wa, Wb, and Wc be determined so that a node device having a larger influence in a network to which the base station 1A is connected has a larger value. The weight information Wa, Wb, and Wc can be set to values based on the number of node device(s) that are the communication counterpart(s) to which each of the base stations 1A, 1B, and 1C is connected, for example, values obtained by subtracting 1 from the number of connections of the node device(s) that are the communication counterpart(s). In that case, the weight information Wa is set to 1, the weight information Wb is set to 0, and the weight information Wc is set to 0. By setting a value of the weight information to a value obtained by subtracting 1 from the number of node device(s) that are the communication counterpart(s), values of the weight information of the base stations 1B and 1C each having one node device that is the communication counterpart can be set to zero. In that case, it is possible to prevent the influence of the timing of the node device of which the number of connections is one from propagating to other node devices, which makes it possible to improve synchronization performance.

An influence in a network is generally called network centrality. Out of network centralities, that based on the number of connected nodes is called degree centrality. It is desirable that the higher the degree centrality, the larger values the weight information Wa, Wb, and Wc have.

When the weight information Wa of the base station 1A is updated, a weight update unit 15 updates the weight information Wa stored in the weight storage unit 13 and outputs the updated weight information Wa to the transmission signal generation unit 16.

The transmission signal generation unit 16 generates a transmission signal to be transmitted by the base station 1A. The transmission signal generation unit 16 outputs the generated transmission signal to the signal transmission unit 10. In addition, the transmission signal generation unit 16 also has a function of notifying the timing difference detection unit 12 of a transmission timing of the transmission signal. Furthermore, when the weight information Wa of the base station 1A is updated, the transmission signal generation unit 16 generates a transmission signal including the updated weight information Wa and outputs the transmission signal to the signal transmission unit 10, and thus the signal transmission unit 10 notifies the node devices that are the communication counterparts of the updated weight information Wa. In addition, the transmission signal generation unit 16 is a transmission timing adjustment unit that, when the timing correction amount calculation unit 14 outputs the timing correction amount Ta, uses the timing correction amount Ta to adjust a transmission timing of a signal transmitted by the signal transmission unit 10. Specifically, the transmission signal generation unit 16 adjusts the transmission timing of the base station 1A so that the timing correction amount Ta becomes zero.

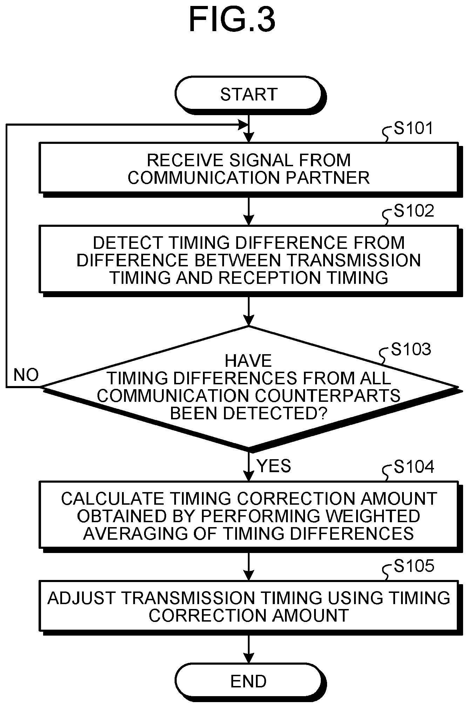

Next, an operation of the base station 1A will be described. FIG. 3 is a flowchart for explaining a timing correction operation of the base station 1A illustrated in FIG. 2. The signal reception unit 11 of the base station 1A receives a signal from a communication counterpart (step S101). The timing difference detection unit 12 detects a timing difference from a difference between a transmission timing and a reception timing (step S102). The timing correction amount calculation unit 14 determines whether the timing differences Tab and Tac from the base stations 1B and 1C that are all of the communication counterparts, respectively, have been detected (step S103).

If the timing differences from all of the communication counterparts have not been detected (step S103: No), the process returns to step S101. If the timing differences from all of the communication counterparts have been detected (step S103: Yes), the timing correction amount calculation unit 14 calculates the timing correction amount Ta obtained by performing weighted averaging of the timing differences Tab and Tac (step S104).

The transmission signal generation unit 16 adjusts the transmission timing using the timing correction amount Ta (step S105).

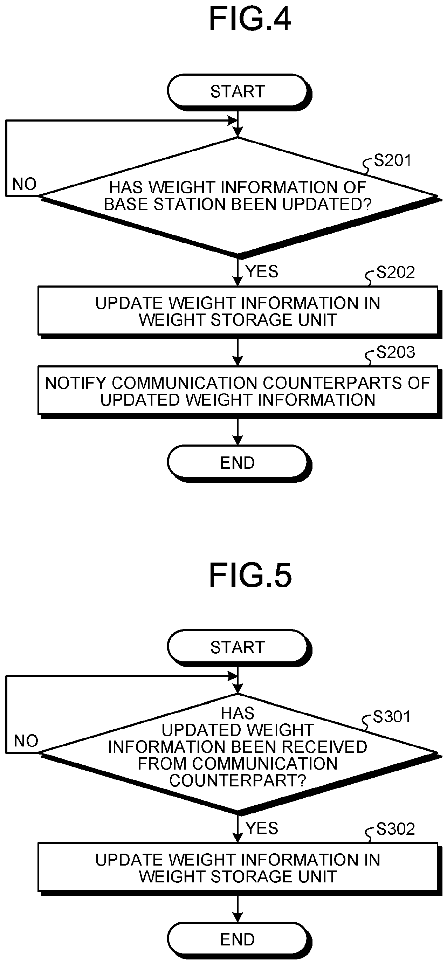

FIG. 4 is a flowchart for explaining an operation when the weight information of the base station 1A illustrated in FIG. 2 is updated. The weight update unit 15 determines whether the weight information Wa of the base station 1A which is a base station including the weight update unit 15 has been updated (step S201). In a case where the weight information Wa is based on the number of node devices that are the communication counterparts, the weight update unit 15 monitors the number of node device(s) connected to the base station 1A, and if the number of node device(s) connected to the base station 1A changes, it is possible to determine that the weight information Wa has been updated.

If the weight information Wa has not been updated (step S201: No), the weight update unit 15 repeats the process in step S201. If the weight information Wa has been updated (step S201: Yes), the weight update unit 15 updates the weight information Wa stored in the weight storage unit 13 (step S202). The weight update unit 15 outputs the updated weight information Wa to the transmission signal generation unit 16. The transmission signal generation unit 16 generates a transmission signal including the updated weight information Wa and causes the signal transmission unit 10 to transmit the signal, thereby notifying the base stations 1B and 1C that are the communication counterparts of the updated weight information Wa (step S203).

FIG. 5 is a flowchart for explaining an operation in which the base station 1A illustrated in FIG. 2 updates weight information of a communication counterpart. When receiving a signal from the communication counterpart, the signal reception unit 11 checks whether the received signal includes the weight information, and thereby determining whether the updated weight information has been received from the communication counterpart (step S301). If the weight information has not been received (step S301 No), the signal reception unit 11 repeats the process in step S301. If the weight information has been received (step S301: Yes), the signal reception unit 11 extracts the updated weight information from the received signal and updates the weight information in the weight storage unit 13 (step S302).

For example, when the signal reception unit 11 receives a signal including the weight information Wb from the base station 1B, the signal reception unit 11 updates the weight information Wb stored in the weight storage unit 13. When the signal reception unit 11 receives a signal including the weight information Wc from the base station 1C, the signal reception unit 11 updates the weight information Wc stored in the weight storage unit 13.

As described above, according to the first embodiment of the present invention, the base station 1A detects the timing differences Tab and Tac from the base stations 1B and 1C that are the communication counterparts, respectively, and adjusts the transmission timing using the timing correction amount Ta obtained by performing weighted averaging of the timing differences Tab and Tac. Use of the weighted averaging as described above makes it possible to reduce the timing differences from the plurality of base stations 1 by performing adjustment once even when there are a plurality of base stations 1 that are the communication counterparts. Therefore, it is possible to shorten a time required for synchronizing between a plurality of node devices.

When the weight information of the base station in which the signal transmission unit 10 is included is updated, the signal transmission unit 10 notifies the node device(s) that are the communication counterpart(s) of the updated weight information. When the weight information of any of the node devices that are communication counterpart(s) is updated, the signal reception unit 11 receives the updated weight information and writes the received weight information into the weight storage unit 13. Therefore, the weight information can be kept up-to-date, and it is possible to efficiently synchronize between the node devices even if there occurs a change in a network configuration, or the like.

The higher the network centrality in the network to which the node device is connected, that is, the larger the influence in the network, the larger a value the weight information has. Specifically, the higher the degree centrality, that is, the larger the number of connections of the node devices that are the communication counterparts, the larger a value the weight information has. By determining the value of the weight information as described above, the other node devices adjust timings in conformity with the node device having a large influence in the network, and thus the synchronization performance can be improved.

In addition, the weight information can be set to a value obtained by subtracting 1 from the number of connections of the node device(s) that are the communication counterpart(s). In that case, the weight information of the node device of which the number of connections is one can be set to 0, and it is possible to prevent the influence of the timing of the node device of which the number of connections is one from propagating to other node devices, which makes it possible to improve the synchronization performance.

Second Embodiment.

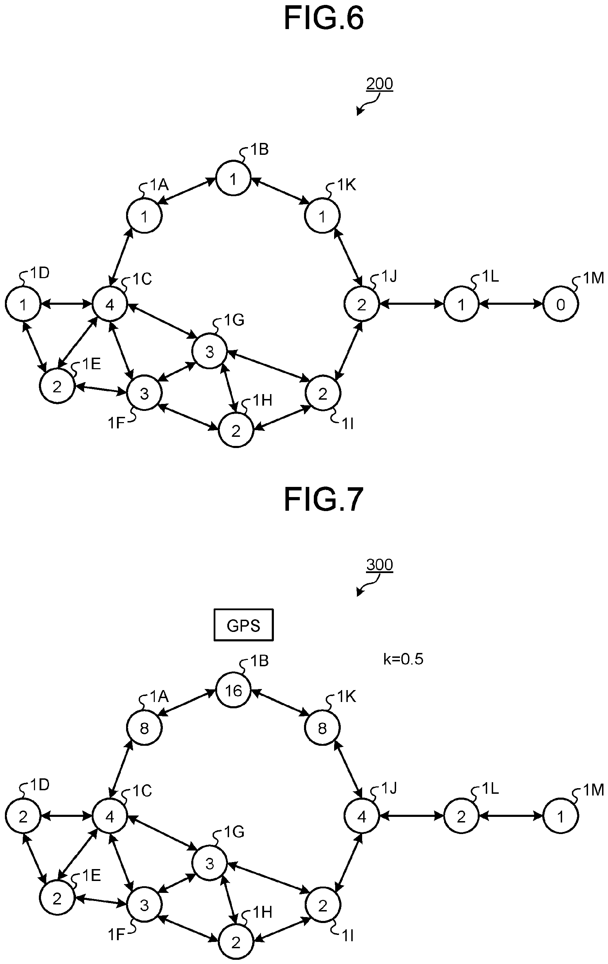

In the first embodiment, the communication system 100 including three base stations 1A, 1B, and 1C has been described. In a second embodiment, a communication system 200 including thirteen base stations 1A to 1M will be described. FIG. 6 is a diagram illustrating a configuration of the communication system 200 according to the second embodiment of the present invention. Each of the base stations 1A to 1M has a functional configuration similar to the base station 1A illustrated in FIG. 2. Furthermore, each of the base stations 1A to 1M can perform the operations illustrated in FIGS. 3 to 5. In FIG. 6, circles represent the base stations 1A to 1M, and lines with arrows represent wireless connections.

The base station 1A can communicate with the base stations 1B and 1C. The base station 1B can communicate with the base stations 1A and 1K. The base station 1C can communicate with the base stations 1A, 1D, 1E, 1F, and 1G. The base station 1D can communicate with the base stations 1C and 1E. The base station 1E can communicate with the base stations 1C, 1D, and 1F. The base station 1F can communicate with the base stations 1C, 1E, 1G, and 1H. The base station 1G can communicate with the base stations 1C, 1F, 1H, and 1I. The base station 1H can communicate with the base stations 1F, 1G, and 1I. The base station 1I can communicate with the base stations 1G, 1H, and 1J. The base station 1J can communicate with the base stations 1I, 1K, and 1L. The base station 1K can communicate with the base stations 1B and 1J. The base station 1L can communicate with the base stations 1J and 1M. The base station 1M can communicate with the base station 1L.

The numbers written in the circles each indicating one of the base stations 1A to 1M in FIG. 6 indicate values of weight information Wa to Wm of the base stations 1A to 1M, respectively. In the present embodiment, similarly to the first embodiment, the value of the weight information is set to a value obtained by subtracting 1 from the number of connections of the base station(s) 1 that are the communication counterpart(s) to which each base station 1 is connected.

The value of the weight information Wa of the base station 1A is 1. The value of the weight information Wb of the base station 1B is 1. The value of the weight information Wc of the base station 1C is 4. The value of the weight information Wd of the base station 1D is 1. The value of the weight information We of the base station 1E is 2. The value of the weight information Wf of the base station 1F is 3. The value of the weight information Wg of the base station 1G is 3. The value of the weight information Wh of the base station 1H is 2. The value of the weight information Wi of the base station 1I is 2. The value of the weight information Wj of the base station 1J is 2. The value of the weight information Wk of the base station 1K is 1. The value of the weight information Wl of the base station 1L is 1. The value of the weight information Wm of the base station 1M is 0.

The timing correction amounts Ta to Tm of the base stations 1A to 1M are as follows.

$$\mathtt{Ta=(1{\times}Tab+4{\times}Tac)/5}$$

$$\mathtt{Tb=(1{\times}Tba+1{\times}Tbk)/2}$$

$$\mathtt{Tc=(1{\times}Tca+1{\times}Tcd+2{\times}Tce+3{\times}Tcf+3{\times}Tcg)/10}$$

$$\mathtt{Td=(4{\times}Tdc+2{\times}Tde)/6}$$

$$\mathtt{Te=(4{\times}Tec+1{\times}Ted+3{\times}Tef)/8}$$

$$\mathtt{Tf=(4{\times}Tfc+2{\times}Tfe+3{\times}Tfg+2{\times}Tfh)/11}$$

$$\mathtt{Tg=(4{\times}Tgc+3{\times}Tgf+2{\times}Tgh+2{\times}Tgi)/11}$$

$$Th=(3\times Thf+3\times Thg+2\times Thi)/8$$

$$Ti=(3\times Tig+2\times Tih+2\times Tij)/7$$

$$Tj=(2\times Tji+1\times Tjk+1\times Tjl)/4$$

$$Tk=(1\times Tkb+2\times Tkj)/3$$

$$Tl=(2\times Tlj+0\times Tlm)/2$$

$$Tm=(1\times Tml)/1$$

Because the base station 1 having a large number of connections has a large influence in the network, increasing the weight of the base station 1 propagates the synchronization throughout the network, and thus it is possible to improve the synchronization performance. In addition, in a case where the value of the weight information is set to a value obtained by subtracting 1 from the number of connections, if the number of connections is one as in the base station 1M, the weight will be 0, and therefore it is possible to prevent the influence of the timing of the base station 1M from propagating to the other node devices. In that case, the synchronization performance can be improved by the base station 1L synchronizing with the base station 1J regardless of the timing of the base station 1M.

As described above, according to the second embodiment of the present invention, similarly to the first embodiment, use of the weighted averaging makes it possible to reduce the timing differences from the plurality of base stations 1 by once adjustment even when there are a plurality of base stations 1 that are the communication counterparts. Therefore, it is possible to shorten a time required for synchronizing between a plurality of node devices.

Third Embodiment.

FIG. 7 is a diagram illustrating a configuration of a communication system 300 according to a third embodiment of the present invention. The communication system 300 includes the base stations 1A to 1M. Each of the base stations 1A to 1M has a functional configuration similar to the base station 1A illustrated in FIG. 2. Furthermore, each of the base stations 1A to 1M can perform the operations illustrated in FIGS. 3 to 5. In FIG. 7, circles represent the base stations 1A to 1M, and lines with arrows represent wireless connections. The numbers written in the circles each indicating one of the base stations 1A to 1M in FIG. 7 indicate values of the weight information Wa to Wm of the base stations 1A to 1M, respectively. Because the base stations 1 with which each of the base stations 1A to 1M can communicate are similar to those in the second embodiment, the descriptions thereof will be omitted here.

In the third embodiment, the weight information is determined differently from the first and second embodiments. For example, the base station 1B has a function of connecting to a positioning satellite such as the Global Positioning System (GPS), receives a signal from the positioning satellite, and generates a time signal synchronized with a reference time such as Coordinated Universal Time (UTC), thereby generating a transmission timing. In a case where the base station 1B serves as reference in the network as described above, it is possible to improve the synchronization performance by employing a configuration in which the value of the weight information Wb of the base station 1B is made larger than the values of the weight information Wa and Wc to Wm of the respective other base stations 1A and 1C to 1M, and in addition, the weight is propagated around the base station 1B.

In the present embodiment, the weight update unit 15 of the base station 1B sets the weight information Wb of the base station 1B to a fixed positive value regardless of the number of connections of communication counterparts. At that time, the value of the weight information Wb is set to a value larger than the values of the weight information Wa and Wc to Wm of the base stations 1A and 1C to 1M which are base stations other than the base station 1B serving as reference. It is desirable that the value of the weight information Wb of the base station 1B serving as reference be larger than a maximum value of the number of connections of communication counterparts in the communication system 300. In addition, the weight update unit 15 of the base station 1B sets the values of the weight information Wa and Wc to Wm of the respective base stations 1A and 1C to 1M which are base stations other than the base station 1B serving as reference to zero. By setting the weight information Wa to Wm stored in the base station 1B serving as reference as described above, the timing of the base station 1B serving as reference is no longer updated.

**EP 4 050 835 B1**

The weight update units 15 of the base stations 1A and 1C to 1M not serving as reference each set, as the weights of the base stations 1A and 1C to 1M, a larger value out of a value k times as large as a maximum value of the weights of the surrounding base stations 1 and a value obtained by subtracting 1 from the number of connections of the base station(s) 1 that are the communication counterpart(s). k is a coefficient that takes a value between 0 and 1.

In a case where the weight update units 15 of the base stations 1A to 1M are operated as described above, the values of the weight information Wa to Wm of the respective base stations 1A to 1M are as illustrated in FIG. 7. Here, the value of the weight information Wb of the base station 1B is fixed to "16", and the coefficient k is set to 0.5.

In that case, the weight information Wc and We to Wi of the base stations 1C and 1E to 1I have each a value obtained by subtracting 1 from the number of connections, and the weight information Wa, Wd and Wj to Wm of the base stations 1A, 1D and 1J to 1M have each a value k times as large as the maximum value of the weights of the surrounding base stations 1. Specifically, a value of the weight information Wa of the base station 1A is 8, a value of the weight information Wd of the base station 1D is 2, a value of the weight information Wj of the base station 1J is 4, a value of the weight information Wk of the base station 1K is 8, a value of the weight information Wl of the base station 1L is 2, and a value of the weight information Wm of the base station 1M is 1. Because the values of the weight information Wc and We to Wi of the base stations 1C and 1E to 1I are similar to those in the second embodiment, specific descriptions thereof will be omitted here.

As described above, according to the third embodiment of the present invention, in a case where there is the base station 1B serving as reference, the timing of the base station 1B serving as reference is prevented from being updated, and the timing of the base station 1B is efficiently propagated to the base stations 1A and 1C to 1M not serving as reference. Therefore, it is possible to shorten a time required for achieving synchronization in the communication system 300 including the plurality of base stations 1A to 1M. In addition, because each of the base stations 1A to 1M autonomously updates the weight, it is possible to make an autonomous response even if a failure of the base station 1 occurs in the communication system 300.

In the third embodiment, the base station 1 serving as reference is the base station 1B having the GPS function, but the present embodiment is not limited to such an example. The base station 1 serving as reference may be a base station 1 having a function of connecting to a positioning satellite other than the GPS, or a base station 1 having a timing serving as reference in the network. In the communication system 300, even if a failure of the base station 1B serving as reference occurs, the synchronization between the other base stations 1A and 1C to 1M is maintained, which makes a robust system.

In addition, it is possible to synchronize between the base stations 1 also by equipping all the base stations 1 with a function of connecting to the GPS, and by each base station 1 generating a time signal synchronized with a reference time to thereby generate a transmission timing. However, in that case, there is a problem in that it is necessary to mount a GPS receiver on all the base stations 1, and thus the cost of the base stations 1 increases. Furthermore, because GPS satellite signals are weak, it is difficult to realize the above case in environments with poor visibility such as indoors and a street lined with office buildings. On the other hand, in the method disclosed in the third embodiment, it is only required to mount the GPS receiver on at least one base station 1B serving as reference, and thus the cost can be reduced. In addition, if only the base station 1B serving as reference is installed at a position with good visibility and in which GPS signals can be received, the other base stations 1A and 1C to 1M can be installed even indoors or in an environment with poor visibility from satellites.

Next, a hardware configuration of the base stations 1A to 1M according to the first to third embodiments of the present invention will be described. The functions of the timing difference detection unit 12, the weight storage unit 13, the timing correction amount calculation unit 14, the weight update unit 15, and the transmission signal generation unit 16 illustrated in FIG. 2 are realized by processing circuitry. The processing circuitry may be realized by dedicated hardware, or one or more control circuits using a central processing unit (CPU).

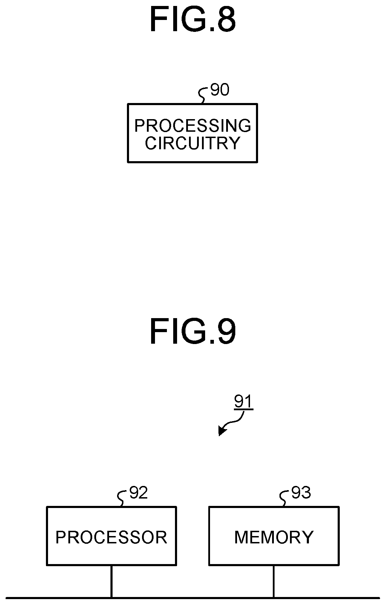

In a case where the above-described processing circuitry is realized by dedicated hardware, the processing circuitry is realized by a processing circuitry 90 illustrated in FIG. 8. FIG. 8 is a diagram illustrating dedicated hardware for realizing functions of the base stations 1A to 1M according to the first to third embodiments of the present invention. The processing circuitry 90 is a single circuit, a composite circuit, a programmed processor, a parallel programmed processor, an application specific integrated circuit (ASIC), a field programmable gate array (FPGA), or a combination thereof.

In a case where the above-described processing circuitry is realized by a control circuit using a CPU, the control circuit is a control circuit 91 configured as illustrated in FIG. 9, for example. FIG. 9 is a diagram illustrating a configuration of the control circuit 91 for realizing the functions of the base stations 1A to 1M according to the first to third embodiments of the present invention. As illustrated in FIG. 9, the control circuit 91 includes a processor 92 and a memory 93. The processor 92 is a CPU, and also referred to as a processing device, an arithmetic device, a microprocessor, a microcomputer, a digital signal processor (DSP), or the like. The memory 93 is, for example, a non-volatile or volatile semiconductor memory such as a random access memory (RAM), a read only memory (ROM), a flash memory, an erasable programmable ROM (EPROM), or an electrically EPROM (EEPROM (registered trademark)), a magnetic disk, a flexible

8

disk, an optical disk, a compact disc, a mini disk, or a digital versatile disk (DVD).

In a case where the above-described processing circuitry is realized by the control circuit 91, it is realized by the processor 92 reading and executing a program corresponding to a process of each component stored in the memory 93. The memory 93 is also used as a temporary memory in each process executed by the processor 92. The program executed by the processor 92 may be provided via a network or may be provided in a state of being stored in a storage medium.

The configurations described in the embodiments above are merely examples of the content of the present invention and can be combined with other known technology and part thereof can be omitted or modified without departing from the scope of protection as defined by the appended claims.

For example, in addition to the above functions, each base station 1 may exchange a detected timing difference between the plurality of base stations 1 to correct a propagation delay.

Reference Signs List

1, 1A to 1M base station; 10 signal transmission unit; 11 signal reception unit; 12 timing difference detection unit; 13 weight storage unit; 14 timing correction amount calculation unit; 15 weight update unit; 16 transmission signal generation unit; 90 processing circuitry; 91 control circuit; 92 processor; 93 memory; 100, 200, 300 communication system.

**Claims**

1. A node device (1A) configured to synchronize with a plurality of node devices that are communication counterparts (1B, 1C), the node device (1A) comprising:

   a signal transmission unit (10) configured to transmit a signal to each of the plurality of node devices that are communication counterparts (1);
   a signal reception unit (11) configured to receive a signal from each of the plurality of node devices that are communication counterparts;
   a timing difference detection unit (12) configured to detect a timing difference (Tab, Tac) between the node device (1A) and each of the plurality of node devices that are communication counterparts (1B, 1C) using a transmission timing at which the signal transmission unit (10) transmits a signal and a reception timing at which the signal reception unit (11) receives a signal from each of the plurality of node devices that are communication counterparts (1B, 1C);
   a weight storage unit (13) configured to store weight information of each of the node device (1A) and the plurality of node devices that are communication counterparts (1B, 1C), wherein the higher degree centrality of each of the node device (1A) and the plurality of node devices that are communication counterparts, the larger a value the weight information stored in the weight storage unit (13) has, wherein the degree centrality is based on a number of communication counterparts;
   a timing correction amount calculation unit (14) configured to calculate a timing correction amount (Ta) obtained by performing weighted averaging of the timing differences (Tab, Tac) on a basis of weight information of each of a plurality of node devices that are the communication counterparts (1B, 1C); and
   a transmission timing adjustment unit (16) configured to adjust the transmission timing using the timing correction amount.

2. The node device (1A) according to claim 1, wherein

   the signal transmission unit is configured in such a way that when weight information of the node device (1A) is updated, the signal transmission unit (10) notifies the plurality of node devices that are communication counterparts (1B, 1C) of the updated weight information, and
   the signal reception unit is configured in such a way that when the weight information of any of the plurality of node devices that are communication counterparts (1B, 1C) is updated, the signal reception unit (11) receives the updated weight information and writes the received weight information into the weight storage unit (13).

3. The node device (1A) according to claim 1 or claim 2, wherein the weight information of each of the node device and the plurality of node devices that are communication counterparts (1B, 1C) stored in the weight storage unit (13) has a value obtained by subtracting 1 from a number of connections of each of the node device and the at least one node device that is communication counterpart (1B, 1C).

**4.** A node device (1) configured to synchronize with a plurality of node devices that are communication counterparts (1), the node device (1) comprising:

a signal transmission unit (10) configured to transmit a signal to each of the plurality of node devices that are communication counterparts (1);

a signal reception unit (11) configured to receive a signal from each of the plurality of node devices that communication counterparts (1);

a timing difference detection unit (12) configured to detect a timing difference between the node device (1) and each of the plurality of node devices that are communication counterparts (1) using a transmission timing at which the signal transmission unit (10) transmits a signal and a reception timing at which the signal reception unit (11) receives a signal from each of the plurality of node devices that are communication counterparts (1);

a weight storage unit (13) configured to store weight information of each of the node device (1) and the plurality of node devices that are communication counterparts;

a timing correction amount calculation unit (14) configured to calculate a timing correction amount obtained by performing weighted averaging of the at least one timing difference on a basis of weight information of each of the plurality of node devices that are communication counterparts (1); and

a transmission timing adjustment unit (16) configured to adjust the transmission timing using the timing correction amount, wherein when there is a node device configured to serve as reference (1B) other than the node device in a communication system (300) in which the node device (1) is included, the timing of the node device serving as reference (1B) is prevented from being updated,

the weight information of the node device serving as reference (1B) has a fixed positive value larger than the value of the weight information of each of the node device and the plurality of node devices that are communication counterparts other than the node device serving as reference (1B),

the weight information of each of the node device and the plurality of node devices that are communication counterparts other than the node device serving as reference (1B) is determined as a larger value out of: a value obtained by multiplying a maximum value of the weight information of at least one surrounding node device to which a node device for which a weight information is being determined is connected by a coefficient having a value between 0 and 1, and a value obtained by subtracting 1 from a number of connections of the node device for which the weight information is being determined.

**5.** The node device (1A) according to claim 4, wherein the node device configured to serve as reference (1B) is a node device having a function of connecting to a positioning satellite.

**6.** A communication system (300) comprising:

a plurality of the node devices (1A-1M), each according to any one of claims 1 to 4, wherein each of the plurality of node devices (1A-1M) is configured to autonomously synchronize between the plurality of node devices (1A-1M).

**7.** A control circuit (91) configured to control a node device (1A), wherein the node device (1A) is configured to synchronize with a plurality of node devices that are communication counterparts (1), the control circuit (91) configured to execute:

a step of detecting a timing difference between a node device to be controlled (1A) and each of the plurality of node devices that are communication counterparts (1B, 1C) using a transmission timing at which the node device to be controlled transmits a signal and a reception timing at which the node device to be controlled (1A) receives a signal from each of the plurality of node devices that are communication counterparts (1B, 1C);

a step of calculating a timing correction amount obtained by performing weighted averaging of the at least one timing difference on a basis of weight information of each of the plurality of node devices that are communication counterparts (1B, 1C), wherein the higher degree centrality of each of the plurality of node devices that are communication counterparts (1B, 1C), the larger a value the weight information has, wherein the degree centrality is based on a number of communication counterparts; and

a step of adjusting the transmission timing using the timing correction amount.

**8.** A control circuit configured to control a node device (1), wherein the node device (1A) is configured to synchronize with a plurality of node devices that are communication counterparts (1), the control circuit configured to execute:

a step of detecting a timing difference between a node device to be controlled (1) and each of the plurality of node devices that are communication counterparts (1) using a transmission timing at which the node device to be controlled (1) transmits a signal and a reception timing at which the node device to be controlled (1) receives a signal from each of the plurality of node devices that are communication counterparts (1);

a step of calculating a timing correction amount obtained by performing weighted averaging of the timing differences on a basis of weight information of each of the plurality of node devices that are communication counterparts (1); and

a step of adjusting the transmission timing using the timing correction amount, wherein

when there is a node device serving as reference (1B) other than the node device to be controlled in a communication system (300) in which the node device to be controlled (1) is included, the timing of the node device serving as reference (1B) is prevented from being updated,

the weight information of the node device configured to serve as reference (1B) has a fixed positive value larger than the value of the weight information of each of the node device and the plurality of node devices that are communication counterparts other than the node device serving as reference (1B),

the weight information of each of the node device and the plurality of node devices that are communication counterparts is determined as a larger value out of: a value obtained by multiplying a maximum value of the weight information of at least one surrounding node device to which a node device for which a weight information is being determined is connected by a coefficient having a value between 0 and 1, and a value obtained by subtracting 1 from a number of connections of the node device for which the weight information is being determined.

9. A storage medium configured to store a program for controlling a node device (1A), wherein when the program is executed by a node device, it causes the node device to execute:

a step of detecting a timing difference between a node device to be controlled (1A) and each of the plurality of node devices that are communication counterparts (1B, 1C) using a transmission timing at which the node device to be controlled (1A) transmits a signal and a reception timing at which the node device to be controlled (1A) receives a signal from each of the plurality of node devices that are communication counterparts (1B, 1C);

a step of calculating a timing correction amount obtained by performing weighted averaging of the timing differences on a basis of weight information of each of the plurality of node devices that are communication counterparts (1B, 1C), wherein the higher degree centrality of each of the plurality of node devices that are communication counterparts (1B, 1C), the larger a value the weight information has, wherein the degree centrality is based on a number of communication counterparts; and

a step of adjusting the transmission timing using the timing correction amount.

10. A storage medium configured to store a program for controlling a node device (1), wherein when the program is executed by a node device, it causes the node device to execute:

a step of detecting a timing difference between a node device to be controlled (1) and each of the plurality of node devices that are communication counterparts (1) using a transmission timing at which the node device to be controlled (1) transmits a signal and a reception timing at which the node device to be controlled (1) receives a signal from each of the plurality of node devices that are communication counterparts (1);

a step of calculating a timing correction amount obtained by performing weighted averaging of the timing differences on a basis of weight information of each of the plurality of node devices that are communication counterparts (1); and

a step of adjusting the transmission timing using the timing correction amount,

when there is a node device serving as reference (1B) other than the node device to be controlled in a communication system (300) in which the node device to be controlled (1) is included, the timing of the node device serving as reference (1B) is prevented from being updated,

the weight information of the node device serving as reference (1B) has a fixed positive value larger than the value of the weight information of each of the node device and the plurality of node devices that are communication counterparts other than the node device serving as reference (1B),

the weight information of each of the node device and the plurality of node devices that are communication counterparts other than the node device serving as reference (1B) is determined as

a larger value out of: a value obtained by multiplying a maximum value of the weight information of at least one surrounding node device to which a node device for which a weight information is being determined is connected by a coefficient having a value between 0 and 1, and a value obtained by subtracting 1 from a number of connections of the node device for which the weight information is being determined.

11. A synchronization method for autonomously synchronizing a node device with a plurality of node devices that are communication counterparts (1), the method being executed by the node device and the method (1) comprises:

transmitting a signal to plurality of node devices that are communication counterparts (1);
receiving a signal from the plurality of node devices that are communication counterparts (1); and
storing weight information of each of the node device (1) and the plurality of node devices that are the communication counterparts (1),

wherein

the higher degree centrality of each of the plurality of node devices that are communication counterparts (1), the larger a value the weight information stored in the weight storage unit (13) has, wherein the degree centrality is based on a number of communication counterparts;
detecting a timing difference between the node device (1) and each of the plurality of node devices that are communication counterparts (1) using a transmission timing at which the signal transmission unit (10) transmits a signal and a reception timing at which the signal reception unit (11) receives a signal from each of the plurality of node devices that are communication counterparts (1),
calculating a timing correction amount obtained by performing weighted averaging of the timing differences on a basis of weight information of each of the plurality of node devices that are communication counterparts (1), and
adjusting the transmission timing using the timing correction amount.

12. A synchronization method for autonomously synchronizing a node device with a plurality of node devices that are communication counterparts (1), the method being executed by the node device and the method comprises:

transmitting a signal to the plurality of node devices that are communication counterparts (1);
receiving a signal from the plurality of node devices that are communication counterparts (1); and
storing weight information of each of the node device and the plurality of node devices that are communication counterparts (1);
detecting a timing difference between the node device (1) and each of the ate least one node device that is the communication counterpart (1) using a transmission timing at which the signal transmission unit (10) transmits a signal and a reception timing at which the signal reception unit (11) receives a signal from each of the plurality of node devices that are communication counterparts (1),
calculating a timing correction amount obtained by performing weighted averaging of the timing differences on a basis of weight information of each of the plurality of node devices that are communication counterparts (1), and
adjusting the transmission timing using the timing correction amount, wherein
when there is a node device serving as reference (1B) other than the node device in a communication system (300) in which the node device (1) is included, the timing of the node device serving as reference (1B) is prevented from being updated,
the weight information of each of the node device (1) and the plurality of node devices that are communication counterparts other than the node device serving as reference (1B) is determined as
a larger value out of: a value obtained by multiplying a maximum value of the weight information of at least one surrounding node device to which a node device for which a weight information is being determined is connected by a coefficient having a value between 0 and 1, and a value obtained by subtracting 1 from a number of connections of the node device for which the weight information is being determined.

## Patentansprüche

1. Knoteneinrichtung (1A), die eingerichtet ist, sich mit einer Vielzahl von Knoteneinrichtungen, die Kommunikations-Gegenstücke (1B, 1C) sind, zu synchronisieren, wobei die Knoteneinrichtung (1A) umfasst:

eine Signalübertragungseinheit (10), die eingerichtet ist, ein Signal an jede der Vielzahl von Knoteneinrichtungen, welche Kommunikations-Gegenstücke (1) sind, zu übertragen;
eine Signalempfangseinheit (11), die eingerichtet ist, ein Signal von jeder der Vielzahl von Knoteneinrichtungen, die Kommunikations-Gegenstücke sind, zu empfangen;
eine Zeitdifferenz-Erfassungseinheit (12), die eingerichtet ist, eine Zeitdifferenz (Tab, Tac) zwischen der Knoteneinrichtung (1A) und jeder der Vielzahl von Knoteneinrichtungen, die Kommunikations-Gegenstücke (1B, 1C) sind, unter Verwendung einer Übertragungszeit, zu der die Signalübertragungseinheit (10) ein Signal überträgt, und einer Empfangszeit, zu der die Signalempfangseinheit (11) ein Signal von jeder der Vielzahl von Knoteneinrichtungen, die Kommunikations-Gegenstücke (1B, 1C) sind, empfängt, zu erfassen;

eine Gewichtungs-Speichereinheit (13), die eingerichtet ist, Gewichtungsinformationen von jeder von der Knoteneinrichtung (1A) und der Vielzahl von Knoteneinrichtungen, die Kommunikations-Gegenstücke (1B, 1C) sind, zu speichern, wobei die Gewichtungsinformationen, die in der Gewichtungs-Speichereinheit (13) gespeichert sind, einen umso größeren Wert haben, je höher die Gradzentralität von jeder von der Knoteneinrichtung (1A) und der Vielzahl von Knoteneinrichtungen, die Kommunikations-Gegenstücke sind, ist, wobei die Gradzentralität auf einer Anzahl von Kommunikations-Gegenstücken basiert;

eine Zeitkorrekturbetrags-Berechnungseinheit (14), die eingerichtet ist, einen Zeitkorrekturbetrag (Ta), der durch Ausführen einer gewichteten Mittelwertbildung der Zeitdifferenzen (Tab, Tac) auf der Grundlage von Gewichtungsinformationen von jeder einer Vielzahl von Knoteneinrichtungen, welche die Kommunikations-Gegenstücke (1B, 1C) sind, erhalten wird, zu berechnen; und

eine Übertragungszeit-Einstellungseinheit (16), die eingerichtet ist, die Übertragungszeit unter Verwendung des Zeitkorrekturbetrags einzustellen.

2. Knoteneinrichtung (1A) nach Anspruch 1, wobei

die Signalübertragungseinheit derart eingerichtet ist, dass die Signalübertragungseinheit (10), wenn Gewichtungsinformationen der Knoteneinrichtung (1A) aktualisiert werden, die Vielzahl von Knoteneinrichtungen, die Kommunikations-Gegenstücke (1B, 1C) sind, über die aktualisierten Gewichtungsinformationen benachrichtigt, und

die Signalempfangseinheit derart eingerichtet ist, dass die Signalempfangseinheit (11), wenn die Gewichtungsinformationen irgendeiner der Vielzahl von Knoteneinrichtungen, die Kommunikations-Gegenstücke (1B, 1C) sind, aktualisiert werden, die aktualisierten Gewichtungsinformationen empfängt und die empfangenen Gewichtungsinformationen in die Gewichtungs-Speichereinheit (13) schreibt.

3. Knoteneinrichtung (1A) nach Anspruch 1 oder Anspruch 2, wobei die in der Gewichtungs-Speichereinheit (13) gespeicherten Gewichtungsinformationen jeweils von der Knoteneinrichtung und der Vielzahl von Knoteneinrichtungen, die Kommunikations-Gegenstücke (1B, 1C) sind, einen Wert haben, der durch Subtrahieren von 1 von einer Anzahl von Verbindungen von jeder von der Knoteneinrichtung und der zumindest einen Knoteneinrichtung, die ein Kommunikations-Gegenstück (1B, 1C) ist, erhalten wird.

4. Knoteneinrichtung (1), die eingerichtet ist, sich mit einer Vielzahl von Knoteneinrichtungen, die Kommunikations-Gegenstücke (1) sind, zu synchronisieren, wobei die Knoteneinrichtung (1) umfasst:

eine Signalübertragungseinheit (10), die eingerichtet ist, ein Signal an jede der Vielzahl von Knoteneinrichtungen, welche Kommunikations-Gegenstücke (1) sind, zu übertragen;

eine Signalübertragungseinheit (11), die eingerichtet ist, ein Signal von jeder der Vielzahl von Knoteneinrichtungen, die Kommunikations-Gegenstücke (1) sind, zu empfangen;

eine Zeitdifferenz-Erfassungseinheit (12), die eingerichtet ist, eine Zeitdifferenz zwischen der Knoteneinrichtung (1) und jeder der Vielzahl von Knoteneinrichtungen, die Kommunikations-Gegenstücke (1) sind, unter Verwendung einer Übertragungszeit, zu der die Signalübertragungseinheit (10) ein Signal überträgt, und einer Empfangszeit, zu der die Signalempfangseinheit (11) ein Signal von jeder der Vielzahl von Knoteneinrichtungen, die Kommunikations-Gegenstücke (1) sind, empfängt, zu erfassen;

eine Gewichtungs-Speichereinheit (13), die eingerichtet ist, Gewichtungsinformationen von jeder der Vielzahl von Knoteneinrichtungen (1) und der Vielzahl von Knoteneinrichtungen, die Kommunikations-Gegenstücke sind, zu speichern;

eine Zeitkorrekturbetrags-Berechnungseinheit (14), die eingerichtet ist, einen Zeitkorrekturbetrag, der durch Ausführen einer gewichteten Mittelwertbildung der zumindest einen Zeitdifferenz auf der Grundlage von Gewichtungsinformationen von jeder der Vielzahl von Knoteneinrichtungen, welche die Kommunikations-Gegenstücke (1) sind, erhalten wird, zu berechnen; und

eine Übertragungszeit-Einstellungseinheit (16), die eingerichtet ist, die Übertragungszeit unter Verwendung des Zeitkorrekturbetrags einzustellen, wobei

wenn es eine Knoteneinrichtung gibt, die eingerichtet ist, als Referenz (1B) zu dienen, die nicht die Knoteneinrichtung in einem Kommunikationssystem (300) ist, in welchem die Knoteneinrichtung (1) enthalten ist, verhindert wird, dass die Zeit der Knoteneinrichtung, die als Referenz (1B) dient, aktualisiert wird,

die Gewichtungsinformationen der als Referenz (1B) dienenden Knoteneinrichtung einen festen positiven Wert haben, der größer ist als der Wert der Gewichtungsinformationen von jeder von der Knoteneinrichtung und der Vielzahl von Knoteneinrichtungen, die Kommunikations-Gegenstücke sind, die nicht die als Referenz (1B) dienende Knoteneinrichtung ist,
die Gewichtungsinformationen von jeder von der Knoteneinrichtung und der Vielzahl von Knoteneinrichtungen, die Kommunikations-Gegenstücke sind, die nicht die als Referenz (1B) dienende Knoteneinrichtung ist, als ein größerer Wert bestimmt wird aus: einem Wert, der durch Multiplizieren eines Maximalwerts der Gewichtungsinformationen von zumindest einer umgebenden Knoteneinrichtung, mit der eine Knoteneinrichtung, für die Gewichtungsinformationen bestimmt werden, verbunden ist, mit einem Koeffizienten mit einem Wert zwischen 0 und 1 erhalten wird, und einem Wert, der durch Subtrahieren von 1 von einer Anzahl von Verbindungen der Knoteneinrichtung, für welche die Gewichtungsinformationen bestimmt werden, erhalten wird.

5. Knoteneinrichtung (1A) nach Anspruch 4, wobei die Knoteneinrichtung, die eingerichtet ist, als Referenz (1B) zu dienen, eine Knoteneinrichtung mit einer Funktion zur Verbindung mit einem Positionsbestimmungssatelliten ist.

6. Kommunikationssystem (300), umfassend:

eine Vielzahl der Knoteneinrichtungen (1A-1M) jeweils nach einem der Ansprüche 1 bis 4, wobei jede der Vielzahl von Knoteneinrichtungen (1A-1M) eingerichtet ist, sich zwischen der Vielzahl von Knoteneinrichtungen (1A-1M) selbstständig zu synchronisieren.

7. Steuerschaltung (91), die eingerichtet ist, eine Knoteneinrichtung (1A) zu steuern, wobei die Knoteneinrichtung (1A) eingerichtet ist, sich mit einer Vielzahl von Knoteneinrichtungen, die Kommunikations-Gegenstücke (1) sind, zu synchronisieren, wobei die Steuerschaltung (91), eingerichtet ist, auszuführen:

einen Schritt des Erfassens einer Zeitdifferenz zwischen einer zu steuernden Knoteneinrichtung (1A) und jeder der Vielzahl von Knoteneinrichtungen, die Kommunikations-Gegenstücke (1B, 1C) sind, unter Verwendung einer Übertragungszeit, zu der die zu steuernde Knoteneinrichtung ein Signal überträgt, und einer Empfangszeit, zu der die zu steuernde Knoteneinrichtung (1A) ein Signal von jeder der Vielzahl von Knoteneinrichtungen, die Kommunikations-Gegenstücke (1B, 1C) sind, empfängt;
einen Schritt des Berechnens eines Zeitkorrekturbetrags, der durch Ausführen einer gewichteten Mittelwertbildung der zumindest einen Zeitdifferenz auf der Grundlage von Gewichtungsinformationen von jeder der Vielzahl von Knoteneinrichtungen, die Kommunikations-Gegenstücke (1B, 1C) sind, erhalten wird, wobei die Gewichtungsinformationen einen umso größeren Wert haben, je höher die Gradzentralität jeder der Vielzahl von Knoteneinrichtungen ist, die Kommunikations-Gegenstücke (1B, 1C) sind, wobei die Gradzentralität auf einer Anzahl von Kommunikations-Gegenstücken basiert; und
einen Schritt des Einstellens der Übertragungszeit unter Verwendung des Zeitkorrekturbetrags.

8. Steuerschaltung, die eingerichtet ist, eine Knoteneinrichtung (1) zu steuern, wobei die Knoteneinrichtung (1A) eingerichtet ist, sich mit einer Vielzahl von Knoteneinrichtungen, die Kommunikations-Gegenstücke (1) sind, zu synchronisieren, wobei die Steuerschaltung eingerichtet ist, auszuführen:

einen Schritt des Erfassens einer Zeitdifferenz zwischen einer zu steuernden Knoteneinrichtung (1) und jeder der Vielzahl von Knoteneinrichtungen, die Kommunikations-Gegenstücke (1) sind, unter Verwendung einer Übertragungszeit, zu der die zu steuernde Knoteneinrichtung (1) ein Signal überträgt, und einer Empfangszeit, zu der die zu steuernde Knoteneinrichtung (1) ein Signal von jeder der Vielzahl von Knoteneinrichtungen, die Kommunikations-Gegenstücke (1) sind, empfängt;
einen Schritt des Berechnens eines Zeitkorrekturbetrags, der durch Durchführen einer gewichteten Mittelwertbildung der Zeitdifferenzen auf der Grundlage von Gewichtungsinformationen jeder der Vielzahl von Knoteneinrichtungen, die Kommunikations-Gegenstücke (1) sind, erhalten wird; und
einen Schritt des Einstellens der Übertragungszeit unter Verwendung des Zeitkorrekturbetrags, wobei
wenn es eine Knoteneinrichtung gibt, die als Referenz (1B) dient, die nicht die Knoteneinrichtung ist, welche in einem Kommunikationssystem (300) zu steuern ist, in welchem die zu steuernde Knoteneinrichtung (1) enthalten ist, verhindert wird, dass die Zeit der Knoteneinrichtung, die als Referenz (1B) dient, aktualisiert wird,
die Gewichtungsinformation der Knoteneinrichtung, die eingerichtet ist, als Referenz (1B) zu dienen, einen festen positiven Wert hat, der größer ist als der Wert der Gewichtungsinformation von jeder von der Knoteneinrichtung und der Vielzahl von Knoteneinrichtungen, die Kommunikations-Gegenstücke sind, die nicht die als Referenz (1B) dienende Knoteneinrichtung ist,
die Gewichtungsinformationen von jeder von der Knoteneinrichtung und der Vielzahl von Knoteneinrichtungen, die Kommunikations-Gegenstücke sind, als ein größerer Wert bestimmt werden aus: einem Wert, der durch Multiplizieren eines Maximalwerts der Gewichtungsinformationen von zumindest einer umgebenden Knoteneinrichtung, mit der eine Knoteneinrichtung, für die Gewichtungsinformationen bestimmt werden, verbunden ist, mit einem Koeffizienten mit einem Wert zwischen 0 und 1 erhalten wird, und einem Wert, der durch Subtrahieren von 1 von einer Anzahl von Verbindungen der Knoteneinrichtung, für welche die Gewichtungsinformationen bestimmt werden, erhalten wird.

9. Speichermedium, das eingerichtet ist, ein Programm zum Steuern einer Knoteneinrichtung (1A) zu speichern, wobei das Programm, wenn es von einer Knoteneinrichtung ausgeführt wird, die Knoteneinrichtung veranlasst, auszuführen:

einen Schritt des Erfassens einer Zeitdifferenz zwischen einer zu steuernden Knoteneinrichtung (1A) und jeder der Vielzahl von Knoteneinrichtungen, die Kommunikations-Gegenstücke (1B, 1C) sind, unter Verwendung einer Übertragungszeit, zu der die zu steuernde Knoteneinrichtung (1A) ein Signal überträgt, und einer Empfangszeit, zu der die zu steuernde Knoteneinrichtung (1A) ein Signal von jeder der Vielzahl von Knoteneinrichtungen, die Kommunikations-Gegenstücke (1B, 1C) sind, empfängt;
einen Schritt des Berechnens eines Zeitkorrekturbetrags, der durch Ausführen einer gewichteten Mittelwertbildung der zumindest einen Zeitdifferenz auf der Grundlage von Gewichtungsinformationen von jeder der Vielzahl von Knoteneinrichtungen, die Kommunikations-Gegenstücke (1B, 1C) sind, erhalten wird, wobei die Gewichtungsinformationen einen umso größeren Wert haben, je höher die Gradzentralität jeder der Vielzahl von Knoteneinrichtungen ist, die Kommunikations-Gegenstücke (1B, 1C) sind, wobei die Gradzentralität auf einer Anzahl von Kommunikations-Gegenstücken basiert; und
einen Schritt des Einstellens der Übertragungszeit unter Verwendung des Zeitkorrekturbetrags.

10. Speichermedium, das eingerichtet ist, ein Programm zum Steuern einer Knoteneinrichtung (1) zu speichern, wobei das Programm, wenn es von einer Knoteneinrichtung ausgeführt wird, die Knoteneinrichtung veranlasst, auszuführen:

einen Schritt des Erfassens einer Zeitdifferenz zwischen einer zu steuernden Knoteneinrichtung (1) und jeder der Vielzahl von Knoteneinrichtungen, die Kommunikations-Gegenstücke (1) sind, unter Verwendung einer Übertragungszeit, zu der die zu steuernde Knoteneinrichtung (1) ein Signal überträgt, und einer Empfangszeit, zu der die zu steuernde Knoteneinrichtung (1) ein Signal von jeder der Vielzahl von Knoteneinrichtungen, die Kommunikations-Gegenstücke (1) sind, empfängt;
einen Schritt des Berechnens eines Zeitkorrekturbetrags, der durch Durchführen einer gewichteten Mittelwertbildung der Zeitdifferenzen auf der Grundlage von Gewichtungsinformationen jeder der Vielzahl von Knoteneinrichtungen, die Kommunikations-Gegenstücke (1) sind, erhalten wird; und
einen Schritt des Einstellens der Übertragungszeit unter Verwendung des Zeitkorrekturbetrags,
wenn es eine Knoteneinrichtung gibt, die als Referenz (1B) dient, die nicht die Knoteneinrichtung ist, welche in einem Kommunikationssystem (300) zu steuern ist, in welchem die zu steuernde Knoteneinrichtung (1) enthalten ist, verhindert wird, dass die Zeit der Knoteneinrichtung, die als Referenz (1B) dient, aktualisiert wird,
die Gewichtungsinformationen der als Referenz (1B) dienenden Knoteneinrichtung einen festen positiven Wert haben, der größer ist als der Wert der Gewichtungsinformationen von jeder von der Knoteneinrichtung und der Vielzahl von Knoteneinrichtungen, die Kommunikations-Gegenstücke sind, die nicht die als Referenz (1B) dienende Knoteneinrichtung ist,
die Gewichtungsinformationen von jeder von der Knoteneinrichtung und der Vielzahl von Knoteneinrichtungen, die Kommunikations-Gegenstücke sind, die nicht die als Referenz (1B) dienende Knoteneinrichtung ist, als ein größerer Wert bestimmt wird aus: einem Wert, der durch Multiplizieren eines Maximalwerts der Gewichtungsinformationen von zumindest einer umgebenden Knoteneinrichtung, mit der eine Knoteneinrichtung, für die Gewichtungsinformationen bestimmt werden, verbunden ist, mit einem Koeffizienten mit einem Wert zwischen 0 und 1 erhalten wird, und einem Wert, der durch Subtrahieren von 1 von einer Anzahl von Verbindungen der Knoteneinrichtung, für welche die Gewichtungsinformationen bestimmt werden, erhalten wird.

11. Synchronisationsverfahren zum selbstständigen Synchronisieren einer Knoteneinrichtung mit einer Vielzahl von Knoteneinrichtungen, welche Kommunikations-Gegenstücke (1) sind, wobei das Verfahren durch die Knoteneinrichtung durchgeführt wird, und das Verfahren (1) umfasst:

Übertragen eines Signals an eine Vielzahl von Knoteneinrichtungen, die Kommunikations-Gegenstücke (1) sind;
Empfangen eines Signals von der Vielzahl von Knoteneinrichtungen, die Kommunikations-Gegenstücke (1) sind; und

Speichern von Gewichtungsinformationen von jeder von der Knoteneinrichtung (1) und der Vielzahl von Knoteneinrichtungen, die Kommunikations-Gegenstücke (1) sind, wobei

je höher die Gradzentralität jeder der Vielzahl von Knoteneinrichtungen ist, die Kommunikations-Gegenstücke (1) sind, umso größer der Wert ist, den die in der Gewichtungs-Speichereinheit (13) gespeicherten Gewichtsinformationen haben, wobei die Gradzentralität auf einer Anzahl von Kommunikations-Gegenstücken basiert;

Erfassen einer Zeitdifferenz zwischen der Knoteneinrichtung (1A) und jeder der Vielzahl von Knoteneinrichtungen, die Kommunikations-Gegenstücke (1) sind, unter Verwendung einer Übertragungszeit, zu der die Signalübertragungseinheit (10) ein Signal überträgt, und einer Empfangszeit, zu der die Signalempfangseinheit (11) ein Signal von jeder der Vielzahl von Knoteneinrichtungen, die Kommunikations-Gegenstücke (1) sind, empfängt,

Berechnen eines Zeitkorrekturbetrags, der durch Durchführen einer gewichteten Mittelwertbildung der Zeitdifferenzen auf der Grundlage von Gewichtungsinformationen jeder der Vielzahl von Knoteneinrichtungen, die Kommunikations-Gegenstücke (1) sind, erhalten wird, und

Einstellen der Übertragungszeit unter Verwendung des Zeitkorrekturbetrags.

12. Synchronisationsverfahren zum selbstständigen Synchronisieren einer Knoteneinrichtung mit einer Vielzahl von Knoteneinrichtungen, die Kommunikations-Gegenstücke (1) sind, wobei das Verfahren durch die Knoteneinrichtung ausgeführt wird und das Verfahren umfasst:

Übertragen eines Signals an die Vielzahl von Knoteneinrichtungen, die Kommunikations-Gegenstücke (1) sind;

Empfangen eines Signals von der Vielzahl von Knoteneinrichtungen, die Kommunikations-Gegenstücke (1) sind; und

Speichern von Gewichtungsinformationen von jeder von der Knoteneinrichtung und der Vielzahl von Knoteneinrichtungen, die Kommunikations-Gegenstücke (1) sind;

Erfassen einer Zeitdifferenz zwischen der Knoteneinrichtung (1A) und jeder von der zumindest einen Knoteneinrichtung, die das Kommunikations-Gegenstück (1) ist, unter Verwendung einer Übertragungszeit, zu der die Signalübertragungseinheit (10) ein Signal überträgt, und einer Empfangszeit, zu der die Signalempfangseinheit (11) ein Signal von jeder der Vielzahl von Knoteneinrichtungen, die Kommunikations-Gegenstücke (1) sind, empfängt,

Berechnen eines Zeitkorrekturbetrags, der durch Durchführen einer gewichteten Mittelwertbildung der Zeitdifferenzen auf der Grundlage von Gewichtungsinformationen jeder der Vielzahl von Knoteneinrichtungen, die Kommunikations-Gegenstücke (1) sind, erhalten wird,

und Einstellen der Übertragungszeit unter Verwendung des Zeitkorrekturbetrags, wobei

wenn es eine Knoteneinrichtung gibt, die als Referenz (1B) dient, die nicht die Knoteneinrichtung in einem Kommunikationssystem (300) ist, in dem die Knoteneinrichtung (1) enthalten ist, verhindert wird, dass der Zeitpunkt der Knoteneinrichtung, die als Referenz (1B) dient, aktualisiert wird,

die Gewichtungsinformationen von jeder von der Knoteneinrichtung (1A) und der Vielzahl von Knoteneinrichtungen, die Kommunikations-Gegenstücke ist, die nicht die als Referenz (1B) dienende Knoteneinrichtung ist, als ein größerer Wert bestimmt wird aus: einem Wert, der durch Multiplizieren eines Maximalwerts der Gewichtungsinformationen von mindestens einer umgebenden Knoteneinrichtung, mit der eine Knoteneinrichtung, für welche Gewichtungsinformationen bestimmt werden, verbunden ist, mit einem Koeffizienten mit einem Wert zwischen 0 und 1 erhalten wird, und einem Wert, der durch Subtrahieren von 1 von einer Anzahl von Verbindungen der Knoteneinrichtung, für welche die Gewichtungsinformationen bestimmt werden, erhalten wird.

## Revendications

1. Dispositif de noeud (1A) configuré pour se synchroniser avec une pluralité de dispositifs de noeuds qui sont des homologues de communication (1B, 1C), le dispositif de noeud (1A) comprenant :

une unité de transmission de signaux (10) configurée pour transmettre un signal à chacun de la pluralité de dispositifs de noeuds qui sont des homologues de communication (1) ;

une unité de réception de signaux (11) configurée pour recevoir un signal de chacun de la pluralité de dispositifs de noeuds qui sont des homologues de communication ;

une unité de détection de différence de synchronisation (12) configurée pour détecter une différence de synchronisation (Tab, Tac) entre le dispositif de noeud (1A) et chacun de la pluralité de dispositifs de noeuds qui sont des homologues de communication (1B, 1C) à l'aide d'une synchronisation de transmission à laquelle l'unité de transmission de signaux (10) transmet un signal et d'une synchronisation de réception à laquelle l'unité de réception de signaux (11) reçoit un signal de chacun de la pluralité de dispositifs de noeuds qui sont des homologues de communication (1B, 1C) ;

une unité de stockage de pondération (13) configurée pour stocker des informations de pondération de chacun du dispositif de noeud (1A) et de la pluralité de dispositifs de noeuds qui sont des homologues de communication (1B, 1C), dans lequel plus le degré de centralité de chacun du dispositif de noeud (1A) et de la pluralité de dispositifs de noeuds qui sont des homologues de communication est élevé, plus une valeur des informations de pondération stockées dans l'unité de stockage de pondération (13) est importante, dans lequel le degré de centralité est fondé sur un nombre d'homologues de communication ;

une unité de calcul de niveau de correction de synchronisation (14) configurée pour calculer un niveau de correction de synchronisation (Ta) obtenu en effectuant une moyenne pondérée des différences de synchronisation (Tab, Tac) sur la base des informations de pondération de chacun d'une pluralité de dispositifs de noeuds qui sont les homologues de communication (1B, 1C) ; et

une unité d'ajustement de synchronisation de transmission (16) configurée pour ajuster la synchronisation de transmission en utilisant le niveau de correction de synchronisation.

2. Dispositif de noeud (1A) selon la revendication 1, dans lequel

l'unité de transmission de signaux est configurée de sorte que, lorsque les informations de pondération du dispositif de noeud (1A) sont mises à jour, l'unité de transmission de signaux (10) notifie les informations de pondération mises à jour à la pluralité de dispositifs de noeuds qui sont des homologues de communication (1B, 1C), et

l'unité de réception de signaux est configurée de sorte que, lorsque les informations de pondération de l'un quelconque de la pluralité de dispositifs de noeuds qui sont des homologues de communication (1B, 1C) sont mises à jour, l'unité de réception de signaux (11) reçoit les informations de pondération mises à jour et écrit les informations de pondération reçues dans l'unité de stockage de pondération (13).

3. Dispositif de noeud (1A) selon la revendication 1 ou la revendication 2, dans lequel les informations de pondération de chacun du dispositif de noeud et de la pluralité de dispositifs de noeud qui sont des homologues de communication (1B, 1C) stockées dans l'unité de stockage de pondération (13) ont une valeur obtenue en soustrayant 1 d'un nombre de connexions de chacun du dispositif de noeud et de l'au moins un dispositif de noeud qui est un homologue de communication (1B, 1C).

4. Dispositif de noeud (1) configuré pour se synchroniser avec une pluralité de dispositifs de noeuds qui sont des homologues de communication (1), le dispositif de noeud (1) comprenant :

une unité de transmission de signaux (10) configurée pour transmettre un signal à chacun de la pluralité de dispositifs de noeuds qui sont des homologues de communication (1) ;

une unité de réception de signaux (11) configurée pour recevoir un signal de chacun de la pluralité de dispositifs de noeuds qui sont des homologues de communication (1) ;

une unité de détection de différence de synchronisation (12) configurée pour détecter une différence de synchronisation entre le dispositif de noeud (1) et chacun de la pluralité de dispositifs de noeuds qui sont des homologues de communication (1) à l'aide d'une synchronisation de transmission à laquelle l'unité de transmission de signaux (10) transmet un signal et d'une synchronisation de réception à laquelle l'unité de réception de signaux (11) reçoit un signal de chacun de la pluralité de dispositifs de noeuds qui sont des homologues de communication (1) ;

une unité de stockage de pondération (13) configurée pour stocker les informations de pondération de chacun du dispositif nodal (1) et de la pluralité de dispositifs de noeuds qui sont des homologues de communication ;

une unité de calcul de niveau de correction de synchronisation (14) configurée pour calculer un niveau de correction de synchronisation obtenu en effectuant une moyenne pondérée de l'au moins une différence de synchronisation sur la base des informations de pondération de chacun de la pluralité de dispositifs de noeuds qui sont les homologues de communication (1) ; et

une unité d'ajustement de synchronisation de transmission (16) configurée pour ajuster la synchronisation de transmission en utilisant le niveau de correction de synchronisation, dans lequel

lorsqu'il existe un dispositif de noeud configuré pour servir de référence (1B) autre que le dispositif de noeud dans un système de communication (300) dans lequel le dispositif de noeud (1) est inclus, la mise à jour de la synchronisation du dispositif de noeud servant de référence (1B) est empêchée,

les informations de pondération du dispositif de noeud servant de référence (1B) ont une valeur positive fixe supérieure à la valeur des informations de pondération de chacun du dispositif de noeud et de la pluralité de dispositifs de noeud qui sont des homologues de communication autres que le dispositif de noeud servant de référence (1B),

les informations de pondération de chacun du dispositif de noeud et de la pluralité de dispositifs de noeuds qui sont des homologues de communication autres que le dispositif de noeud servant de référence (1B) sont déterminées comme étant une plus grande valeur parmi : une valeur obtenue en multipliant une valeur maximale des informations de pondération d'au moins un dispositif de noeud voisin auquel un dispositif de noeud pour lequel des informations de pondération sont déterminées est connecté par un coefficient ayant une valeur comprise entre 0 et 1, et une valeur obtenue en soustrayant 1 d'un nombre de connexions du dispositif de noeud pour lequel les informations de pondération sont déterminées.

5. Dispositif de noeud (1A) selon la revendication 4, dans lequel le dispositif de noeud configuré pour servir de référence (1B) est un dispositif de noeud ayant pour fonction de se connecter à un satellite de positionnement.

6. Système de communication (300) comprenant :

une pluralité de dispositifs de noeuds (1A-1M), chacun selon l'une quelconque des revendications 1 à 4, dans lequel

chacun de la pluralité de dispositifs de noeuds (1A-1M) est configuré pour se synchroniser de manière autonome entre la pluralité de dispositifs de noeuds (1A-1M).

7. Circuit de commande (91) configuré pour commander un dispositif de noeud (1A), dans lequel le dispositif de noeud (1A) est configuré pour se synchroniser avec une pluralité de dispositifs de noeuds qui sont des homologues de communication (1), le circuit de commande (91) étant configuré pour exécuter :

une étape de détection d'une différence de synchronisation entre un dispositif de noeud (1A) à commander et chacun de la pluralité de dispositifs de noeuds qui sont des homologues de communication (1B, 1C) à l'aide d'une synchronisation de transmission à laquelle le dispositif de noeud à commander transmet un signal et d'une synchronisation de réception à laquelle le dispositif de noeud (1A) à commander reçoit un signal de chacun de la pluralité de dispositifs de noeuds qui sont des homologues de communication (1B, 1C) ;

une étape de calcul d'un niveau de correction de synchronisation obtenu en faisant une moyenne pondérée de l'au moins une différence de synchronisation sur la base d'informations de pondération de chacun de la pluralité de dispositifs de noeuds qui sont des homologues de communication (1B, 1C), dans lequel plus le degré de centralité de chacun de la pluralité de dispositifs de noeuds qui sont des homologues de communication (1B, 1C) est élevé, plus une valeur des informations de pondération est importante, dans lequel le degré de centralité est fondé sur un nombre d'homologues de communication ; et

une étape d'ajustement de la synchronisation de transmission en utilisant le niveau de correction de synchronisation.

8. Circuit de commande configuré pour commander un dispositif de noeud (1), dans lequel le dispositif de noeud (1A) est configuré pour se synchroniser avec une pluralité de dispositifs de noeuds qui sont des homologues de communication (1), le circuit de commande étant configuré pour exécuter :

une étape de détection d'une différence de synchronisation entre un dispositif de noeud (1) à commander et chacun de la pluralité de dispositifs de noeuds qui sont des homologues de communication (1) à l'aide d'une synchronisation de transmission à laquelle le dispositif de noeud (1) à commander transmet un signal et d'une synchronisation de réception à laquelle le dispositif de noeud (1) à commander reçoit un signal de chacun de la pluralité de dispositifs de noeuds qui sont des homologues de communication (1) ;

une étape de calcul d'un niveau de correction de synchronisation obtenu en effectuant une moyenne pondérée des différences de synchronisation sur la base d'informations de pondération de chacun de la pluralité de dispositifs de noeuds qui sont des homologues de communication (1) ; et

une étape d'ajustement de la synchronisation de transmission en utilisant le niveau de correction de synchronisation, dans lequel

lorsqu'il existe un dispositif de noeud servant de référence (1B) autre que le dispositif de noeud à commander dans un système de communication (300) dans lequel le dispositif de noeud (1) à commander est inclus, la mise à jour de la synchronisation du dispositif de noeud servant de référence (1B) est empêchée,

les informations de pondération du dispositif de noeud configuré pour servir de référence (1B) ont une valeur positive fixe supérieure à la valeur des informations de pondération de chacun du dispositif de noeud et de la pluralité de dispositifs de noeud qui sont des homologues de communication autres que le dispositif de noeud servant de référence (1B),

les informations de pondération de chacun du dispositif de noeud et de la pluralité de dispositifs de noeuds qui sont des homologues de communication sont déterminées comme une valeur plus grande parmi : une valeur obtenue en multipliant une valeur maximale des informations de pondération d'au moins un dispositif de noeud voisin auquel un dispositif de noeud pour lequel des informations de pondération sont déterminées est connecté par un coefficient ayant une valeur comprise entre 0 et 1, et une valeur obtenue en soustrayant 1 d'un nombre de connexions du dispositif de noeud pour lequel les informations de pondération sont déterminées.

9. Support de stockage configuré pour stocker un programme permettant de commander un dispositif de noeud (1A), dans lequel, lorsque le programme est exécuté par un dispositif de noeud, il amène le dispositif de noeud à exécuter :

une étape de détection d'une différence de synchronisation entre un dispositif de noeud (1A) à commander et chacun de la pluralité de dispositifs de noeuds qui sont des homologues de communication (1B, 1C) à l'aide d'une synchronisation de transmission à laquelle le dispositif de noeud (1A) à commander transmet un signal et d'une synchronisation de réception à laquelle le dispositif de noeud (1A) à commander reçoit un signal de chacun de la pluralité de dispositifs de noeuds qui sont des homologues de communication (1B, 1C) ;

une étape de calcul d'un niveau de correction de synchronisation obtenu en faisant une moyenne pondérée des différences de synchronisation sur la base d'informations de pondération de chacun de la pluralité de dispositifs de noeuds qui sont des homologues de communication (1B, 1C), dans lequel plus le degré de centralité de chacun de la pluralité de dispositifs de noeuds qui sont des homologues de communication (1B, 1C) est élevé, plus une valeur des informations de pondération est importante, dans lequel le degré de centralité est fondé sur un nombre d'homologues de communication ; et

une étape d'ajustement de la synchronisation de transmission en utilisant le niveau de correction de synchronisation.

10. Support de stockage configuré pour stocker un programme permettant de commander un dispositif de noeud (1), dans lequel, lorsque le programme est exécuté par un dispositif de noeud, il amène le dispositif de noeud à exécuter :

une étape de détection d'une différence de synchronisation entre un dispositif de noeud (1) à commander et chacun de la pluralité de dispositifs de noeuds qui sont des homologues de communication (1) à l'aide d'une synchronisation de transmission à laquelle le dispositif de noeud (1) à commander transmet un signal et d'une synchronisation de réception à laquelle le dispositif de noeud (1) à commander reçoit un signal de chacun de la pluralité de dispositifs de noeuds qui sont des homologues de communication (1) ;

une étape de calcul d'un niveau de correction de synchronisation obtenu en effectuant une moyenne pondérée des différences de synchronisation sur la base d'informations de pondération de chacun de la pluralité de dispositifs de noeuds qui sont des homologues de communication (1) ; et

une étape d'ajustement de la synchronisation de transmission en utilisant le niveau de correction de synchronisation,

lorsqu'il existe un dispositif de noeud servant de référence (1B) autre que le dispositif de noeud à commander dans un système de communication (300) dans lequel le dispositif de noeud (1) à commander est inclus, la mise à jour de la synchronisation du dispositif de noeud servant de référence (1B) est empêchée,

les informations de pondération du dispositif de noeud servant de référence (1B) ont une valeur positive fixe supérieure à la valeur des informations de pondération de chacun du dispositif de noeud et de la pluralité de dispositifs de noeud qui sont des homologues de communication autres que le dispositif de noeud servant de référence (1B),

les informations de pondération de chacun du dispositif de noeud et de la pluralité de dispositifs de noeuds qui sont des homologues de communication autres que le dispositif de noeud servant de référence (1B) sont déterminées comme étant une plus grande valeur parmi : une valeur obtenue en multipliant une valeur maximale des informations de pondération d'au moins un dispositif de noeud voisin auquel un dispositif de noeud pour lequel des informations de pondération sont déterminées est connecté par un coefficient ayant une valeur comprise entre 0 et 1, et une valeur obtenue en soustrayant 1 d'un nombre de connexions du dispositif de noeud pour lequel les informations de pondération sont déterminées.

11. Procédé de synchronisation pour synchroniser de manière autonome d'un dispositif de noeud avec une pluralité de dispositifs de noeuds qui sont des homologues de communication (1), le procédé étant exécuté par le dispositif de noeud et le procédé (1) comprend :

la transmission d'un signal à une pluralité de dispositifs de noeuds qui sont des homologues de communication (1) ;

la réception d'un signal de la pluralité de dispositifs de noeuds qui sont des homologues de communication (1) ; et

le stockage d'informations de pondération de chacun du dispositif de noeud (1) et de la pluralité de dispositifs de noeuds qui constituent les homologues de communication (1), dans lequel

plus le degré de centralité de chacun de la pluralité de dispositifs de noeuds qui sont des homologues de communication (1) est élevé, plus la valeur des informations de pondération stockées dans l'unité de stockage de pondération (13) est importante, dans lequel le degré de centralité est fondé sur un nombre d'homologues de communication ;

la détection d'une différence de synchronisation entre le dispositif de noeud (1) et chacun de la pluralité de dispositifs de noeuds qui sont des homologues de communication (1) à l'aide d'une synchronisation de transmission à laquelle l'unité de transmission de signaux (10) transmet un signal et d'une synchronisation de réception à laquelle l'unité de réception de signaux (11) reçoit un signal de chacun de la pluralité de dispositifs de noeuds qui sont des homologues de communication (1),

le calcul d'un niveau de correction de synchronisation obtenu en effectuant une moyenne pondérée des différences de synchronisation sur la base d'informations de pondération de chacun de la pluralité de dispositifs de noeuds qui sont des homologues de communication (1), et

l'ajustement de la synchronisation de transmission en utilisant le niveau de correction de synchronisation.

12. Procédé de synchronisation pour synchroniser de manière autonome un dispositif de noeud avec une pluralité de dispositifs de noeuds qui sont des homologues de communication (1), le procédé étant exécuté par le dispositif de noeud et le procédé comprenant :

la transmission d'un signal à la pluralité de dispositifs de noeuds qui sont des homologues de communication (1) ;

la réception d'un signal de la pluralité de dispositifs de noeuds qui sont des homologues de communication (1) ; et

le stockage d'informations de pondération de chacun du dispositif de noeud et de la pluralité de dispositifs de noeuds qui sont des homologues de communication (1) ;

la détection d'une différence de synchronisation entre le dispositif de noeud (1) et chacun de l'au moins un dispositif de noeud qui est l'homologue de communication (1) à l'aide d'une synchronisation de transmission à laquelle l'unité de transmission de signaux (10) transmet un signal et d'une synchronisation de réception à laquelle l'unité de réception de signaux (11) reçoit un signal de chacun de la pluralité de dispositifs de noeuds qui sont des homologues de communication (1),

le calcul d'un niveau de correction de synchronisation obtenu en effectuant une moyenne pondérée des différences de synchronisation sur la base d'informations de pondération de chacun de la pluralité de dispositifs de noeuds qui sont des homologues de communication (1), et

l'ajustement de la synchronisation de transmission en utilisant le niveau de correction de synchronisation, dans lequel

lorsqu'il existe un dispositif de noeud servant de référence (1B) autre que le dispositif de noeud dans un système de communication (300) dans lequel le dispositif de noeud (1) est inclus, la mise à jour de la synchronisation du dispositif de noeud servant de référence (1B) est empêchée,

les informations de pondération de chacun du dispositif de noeud (1) et de la pluralité de dispositifs de noeuds qui sont des homologues de communication autres que le dispositif de noeud servant de référence (1B) sont déterminées comme une valeur plus grande parmi : une valeur obtenue en multipliant une valeur maximale des informations de pondération d'au moins un dispositif de noeud voisin auquel un dispositif de noeud pour lequel des informations de pondération sont déterminées est connecté par un coefficient ayant une valeur comprise entre 0 et 1, et une valeur obtenue en soustrayant 1 d'un nombre de connexions du dispositif de noeud pour lequel les informations de pondération sont déterminées.

# FIG.1

100

1B

BASE STATION

1A

BASE STATION

1C

BASE STATION

# FIG.2

1A

11

SIGNAL
RECEPTION
UNIT

12

TIMING
DIFFERENCE
DETECTION
UNIT

13

WEIGHT
STORAGE UNIT

14

TIMING
CORRECTION
AMOUNT
CALCULATION
UNIT

15

WEIGHT
UPDATE UNIT

16

TRANSMISSION
SIGNAL
GENERATION
UNIT

10

SIGNAL
TRANSMISSION
UNIT

# FIG.3

START

RECEIVE SIGNAL FROM
COMMUNICATION PARTNER ⌇S101

DETECT TIMING DIFFERENCE FROM
DIFFERENCE BETWEEN TRANSMISSION
TIMING AND RECEPTION TIMING ⌇S102

HAVE
TIMING DIFFERENCES FROM ALL
COMMUNICATION COUNTERPARTS
BEEN DETECTED? ⌇S103

NO

YES

CALCULATE TIMING CORRECTION AMOUNT
OBTAINED BY PERFORMING WEIGHTED
AVERAGING OF TIMING DIFFERENCES ⌇S104

ADJUST TRANSMISSION TIMING USING TIMING
CORRECTION AMOUNT ⌇S105

END

# FIG.4

```
                    ┌─────────────┐
                    │    START    │
                    └──────┬──────┘
        ┌──────────────────▼──────────────────┐
        │                                       S201
   NO   ◄        HAS WEIGHT INFORMATION OF
        ◄        BASE STATION BEEN UPDATED?
        └──────────────────┬──────────────────┘
                           │ YES              S202
        ┌──────────────────▼──────────────────┐
        │    UPDATE WEIGHT INFORMATION IN      │
        │       WEIGHT STORAGE UNIT            │
        └──────────────────┬──────────────────┘
                           │                  S203
        ┌──────────────────▼──────────────────┐
        │ NOTIFY COMMUNICATION COUNTERPARTS OF │
        │    UPDATED WEIGHT INFORMATION        │
        └──────────────────┬──────────────────┘
                    ┌───────▼──────┐
                    │     END      │
                    └──────────────┘
```

# FIG.5

```
                    ┌─────────────┐
                    │    START    │
                    └──────┬──────┘
        ┌──────────────────▼──────────────────┐
        │                                       S301
        │               HAS
   NO   ◄       UPDATED WEIGHT
        ◄     INFORMATION BEEN RECEIVED
        ◄      FROM COMMUNICATION
        │         COUNTERPART?
        └──────────────────┬──────────────────┘
                           │ YES              S302
        ┌──────────────────▼──────────────────┐
        │    UPDATE WEIGHT INFORMATION IN      │
        │       WEIGHT STORAGE UNIT            │
        └──────────────────┬──────────────────┘
                    ┌───────▼──────┐
                    │     END      │
                    └──────────────┘
```

# FIG.6

# FIG.7

# FIG.8

```
                  ⌐90
        ┌──────────────┐
        │  PROCESSING  │
        │   CIRCUITRY  │
        └──────────────┘
```

# FIG.9

```
                 91

        ⌐92              ⌐93
   ┌────────────┐   ┌────────────┐
   │ PROCESSOR  │   │   MEMORY   │
   └─────┬──────┘   └─────┬──────┘
─────────┴────────────────┴──────────
```

**EP 4 050 835 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006273777 A1
- US 2010085989 A1
- US 2013343240 A1
- JP 2007288508 A